Europäisches Patentamt

European Patent Office

Office européen des brevets

(19)

(11) **EP 0 885 766 B2**

(12) **NEUE EUROPÄISCHE PATENTSCHRIFT**

(45) Veröffentlichungstag und Bekanntmachung des Hinweises auf die Entscheidung über den Einspruch:
**19.01.2005 Patentblatt 2005/03**

(45) Hinweis auf die Patenterteilung:
**01.12.1999 Patentblatt 1999/48**

(21) Anmeldenummer: **98105918.1**

(22) Anmeldetag: **01.04.1998**

(51) Int Cl.$^7$: **B60K 23/04**, F16D 23/04

(54) **Verfahren zur Synchronisation zweier sich drehender Teile**

Method for synchronizing two rotating parts

Méthode pour synchroniser la rotation de deux parties

(84) Benannte Vertragsstaaten:
**AT DE FR GB IT SE**

(30) Priorität: **04.06.1997 DE 19723324**

(43) Veröffentlichungstag der Anmeldung:
**23.12.1998 Patentblatt 1998/52**

(73) Patentinhaber: **WABCO GmbH & Co. OHG**
**30453 Hannover (DE)**

(72) Erfinder:
• **Schmidt, Detlef**
**30989 Gehrden (DE)**
• **Lindemann, Klaus**
**30989 Gehrden (DE)**
• **Breithor, Wolf-Christian**
**30966 Hemmingen (DE)**
• **Petersen, Erwin, Dr.**
**31515 Wunstorf (DE)**
• **Deike, Horst**
**31249 Clauen (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
EP-A- 0 510 457        WO-A-88/08383
WO-A-95/19281         DE-A- 3 430 982
DE-A- 4 011 333        DE-A- 4 409 585
US-A- 4 805 715

• **Schreiben der Einsprechenden an die VOLVO Truck Corporation vom 15.12.1995**
• **Schreiben der Einsprechenden an die VOLVO Truck Corporation vom 02.02.1995**
• **Lehrbuch "Taschenbuch für den Maschinenbau" Dubel, 17. Auflage, 1990**
• **Lehrbuch "Taschenbuch für den Maschinenbau" Dubel, 19. Auflage, 1997**
• **Lehrbuch "Grundriss der praktischen Regelungstechnik" Bd.1, Erwin Samal, 10. Auflage, 1974**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Synchronisation zweier sich drehender Teile, insbesondere in einem Kraftfahrzeug, gemäß dem Oberbegriff des Patentanspruchs 1.

Ein derartiges Verfahren ist aus der DE 4 409 585 A1 bekannt. Ein weiteres Verfahren ist aus der EP 0 510 457 B1 bekannt.

Gattungsgemäße Verfahren werden vorzugsweise in Kraftfahrzeugen eingesetzt, die über Ausgleichs- und/oder Verteilergetriebe verfügen. Zur Vermeidung des Durchdrehens einzelner Antriebsräder des Fahrzeuges auf glatter Fahrbahn sind die zuvor genannten Getriebe, die zumeist als Differentialgetriebe ausgelegt sind, mit jeweils einer Sperre versehen, durch die die im Normalbetrieb durch das Getriebe voneinander entkoppelten Teile starr miteinander verbunden werden können.

Es ist zum Teil üblich, daß derartige Sperren anuell vom Fahrer bei Bedarf betätigt werden. Zur Erhöhung des Fahrkomforts und der Fahrsicherheit werden derartige Sperren zuweilen auch automatisch durch ein Steuersignal von einem Steuergerät betätigt, wenn bestimmte, durch Sensoren ermittelte äußere Bedingungen vorliegen.

Bei dem bekannten Verfahren wird eine Sperre für ein Ausgleichs- oder Verteilergetriebe automatisch in der zuvor beschriebenen Weise betätigt, wenn die Differenz zwischen den Drehzahlen der an den Abtriebswellen des Getriebes befestigten, drehenden Teile einen bestimmten Grenzwert überschreitet. Zur Vermeidung von Beschädigungen der Sperre oder des Getriebes ist dieser Grenzwert relativ klein, d. h. es wird bei einer geringen Drehzahldifferenz die Sperre betätigt Bei einer großen Drehzahldifferenz wäre eine Betätigung nicht zulässig, weil mit einer Beschädigung der Sperre oder des Getriebes zu rechnen ist. Daher wird bei sehr rasch angestiegener Drehzahldifferenz die perre nicht betätigt und statt dessen auf ein Absinken der Drehzahldifferenz gewartet. In diesem Zeitraum kann jedoch aufgrund des Durchdrehens einzelner Antriebsräder bereits ein gefährlicher Fahrzustand vorliegen. Je nach äußeren Umständen kann dieser gefährliche Fahrzustand eine unbestimmte, sehr große Dauer aufweisen.

Der Erfindung liegt daher die Aufgabe zugrunde, ein Verfahren zur Synchronisation zweier sich drehender Teile anzugeben, durch das bei beliebigem Drehzahlverhalten der drehenden Teile nach einem möglichst kurzen Zeitraum eine Synchronisation dieser Teile herbeigeführt wird, ohne daß hierbei Teile des Kraftfahrzeuges beschädigt werden.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Als Synchronisation von drehenden Teilen wird in den folgenden Ausführungen die Angleichung der Drehzahlen der drehenden Teile aneinander verstanden.

Die Erfindung hat den Vorteil, daß auch bei beliebig großer Abweichung zwischen den Drehzahlen und sogar bei großen Änderungsraten der Drehzahlen nach relativ kurzer Zeit eine Synchronisation der drehenden Teile erfolgen kann, ohne daß hierbei ruckartige Schläge oder Stöße auftreten. Hierdurch können Beschädigungen an dem Getriebe, der Sperre, den drehenden Teilen oder anderen Teilen des Kraftfahrzeuges vermieden werden.

Durch die Verwendung der zweiten Synchronisiermittel, durch deren Betätigung eine Annäherung der Drehzahlen aneinander bewirkt werden kann, ist es möglich, die Annäherung allmählich und nicht sprunghaft erfolgen zu lassen. Daher kann auch ein Durchdrehen des bzw. der zunächst mit der geringeren Drehzahl drehenden Räder, das bei einer unmittelbaren Synchronisation z.B. durch eine Sperre auftreten kann, vermieden werden. Hierdurch kann ein besonders sicheres Fahrverhalten auch bei großen Drehzahlunterschieden erreicht werden.

Gemäß Patentanspruch 1 wird für eine einfache Ermittlung der Annäherungstendenz der Drehzahlen aneinander ein Annäherungswert aus den Drehzahlen bestimmt. Wenn dieser Annäherungswert einen vorbestimmten Grenzwert erreicht, werden durch Betätigung des ersten Synchronisiermittels die drehenden Teile synchronisiert. Hierdurch ist eine besonders einfache Erkennung der vorbestimmten Annäherungstendenz der Drehzahlen aneinander, bei der eine Betätigung des ersten Synchronisiermittels zulässig ist, möglich, z. B. durch Einsatz eines Mikroprozessors, der dann die Bestimmung des Annäherungswertes und den Vergleich mit dem Grenzwert durchführt.

Gemäß Patentanspruch weist der Annäherungswert wenigstens einen Anteil auf, der von der Differenz der Drehzahlen abhängt. Hierdurch ist eine sehr einfache Art der Berechnung möglich.

Gemäß Patentanspruch 1 weist der Annäherungswert wenigstens einen Anteil auf, der von der zeitlichen Ableitung der Differenz der Drehzahlen abhängt. Ein Vorteil hierbei ist, daß auf einfache Weise eine Vorhersage über das vermutliche Zusammentreffen der Drehzahlen gemacht werden kann und somit eventuelle Totzeiten bei der Betätigung des ersten Synchronisiermittels berücksichtigt werden können. Hierbei ist eine aufwendige Speicherung einer Vielzahl von Werten aus einem vergangenen Zeitraum nicht notwendig.

Es ist möglich, die Erfindung sowohl in Verbindung mit einem Ausgleichsgetriebe, das zwischen den Rädern einer Fahrzeugachse angeordnet ist, als auch für ein Verteilergetriebe, das zwischen zwei Fahrzeugachsen, z. B. in einem Fahrzeug mit Allradantrieb, angeordnet ist, einzusetzen. Hierbei werden für das ) Ausgleichs- und das Verteilergetriebe häufig die gleiche Getriebeart, vorzugsweise ein Differentialgetriebe, eingesetzt. Das erste Synchronisiermittel wird dann als Differentialsperre bezeichnet. Es sind jedoch auch andere Arten von Synchronisiermitteln denkbar.

In einer weiteren vorteilhaften Weiterbildung der Erfindung bewirken die zweiten Synchronisiermittel eine Abbremsung des ihnen jeweils zugeordneten Teils, wobei die Bremskraft obendrein einstellbar ist. Hierdurch ist eine besonders feinfühlige, abstufbare Annäherung der Drehzahlen aneinander auch bei beliebig großen Drehzahlunterschieden möglich. In besonders vorteilhafter Weise können dann zudem als zweite Synchronisiermittel direkt die den zu synchronisierenden Rädern eines Kraftfahrzeuges zugeordneten Bremseinrichtungen verwendet werden. Da derartige Bremseinrichtungen in Kraftfahrzeugen ohnehin regelmäßig vorhanden sind, kann die Erfindung mit geringem Aufwand sehr vielfältig eingesetzt werden, insbesondere in Kraftfahrzeugen, die über eine Anlage zur Antriebsschlupfregelung (ASR) verfügen.

In einer weiteren vorteilhaften Weiterbildung der Erfindung erfolgt eine Betätigung des Synchronisiermittels bzw. der Synchronisiermittel erst, wenn eine Hilfsgröße einen ihr zugeordneten Hilfsgrenzwert überschreitet. Bei Verwendung der Erfindung in einem Fahrzeug stellt die Hilfsgröße dann ein Maß für den Antriebsschlupf eines Rades dar. Zur Bestimmung der Hilfsgröße können beispielsweise das Signal eines Fahrzeuggeschwindigkeits-Sensors oder die Drehzahlsignale von Rädern einer nicht angetriebenen Achse, vorzugsweise der lenkbaren Achse des Fahrzeuges, verwendet werden. Durch die Berücksichtigung der Hilfsgröße ist es möglich, bei Kurvenfahrt, vor allem bei engen Kurven, eine unerwünschte Betätigung der Synchronisiermittel zu verhindern.

Die Erfindung wird anhand eines Ausführungsbeispiels unter Zuhilfenahme einer Zeichnung näher erläutert.

Es zeigt

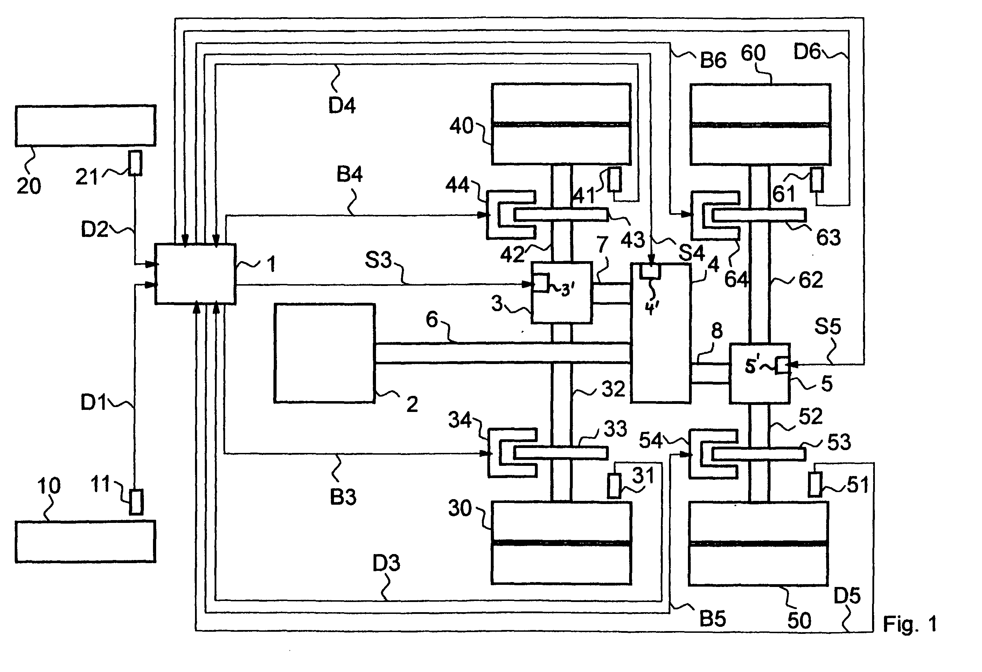

Fig. 1    den schematischen Aufbau eines Kraftfahrzeugs, in dem das erfindungsgemäße Verfahren eingesetzt wird.

In der Fig. 1 sind schematisch einige Komponenten eines Kraftfahrzeuges dargestellt, in dem das erfindungsgemäße Verfahren mehrfach eingesetzt wird. Das Verfahren wird dabei von einem elektronischen Steuergerät (1) mittels eines darin angeordneten Mikroprozessors ausgeführt und ist als Teil des Steuerprogramms für den Mikroprozessor ausgebildet.

Das Fahrzeug gemäß Fig. 1 weist die Räder (10, 20, 30, 40, 50, 60) auf. Die Räder (10, 20) dienen zum Lenken des Fahrzeuges und werden nicht angetrieben. Diese Räder sind üblicherweise an der Vorderachse eines Fahrzeuges angeordnet. Die Räder (30, 40, 50, 60) sind als Antriebsräder ausgebildet und werden mittelbar von dem Antriebsmotor (2) angetrieben. Diese Räder sind jeweils paarweise an zwei Antriebsachsen des Fahrzeuges angeordnet, die üblicherweise als Hinterachsen ausgebildet sind. Das hier betrachtete Fahrzeug ist somit ein dreiachsiges Fahrzeug mit zwei Antriebsachsen, z. B. ein Lastkraftwagen.

Die Antriebsräder (30, 40, 50, 60) sind mit jeweils einer Antriebswelle (32, 42, 52, 62) und einem Teil einer Bremseinrichtung (33, 43, 53, 63) drehfest verbunden. Jedem Antriebsrad (30, 40, 50, 60) ist außerdem ein weiteres Teil (34, 44, 54, 64) der Bremseinrichtung zugeordnet, das mit dem jeweiligen drehfest mit dem Antriebsrad verbundenen Teil der Bremseinrichtung in Wirkverbindung steht und bei Beaufschlagung durch ein Betätigungssignal (B3, B4, B5, B6) eine Bremskraft auf das jeweilige Antriebsrad ausüben kann. Als Betätigungssignal (B3, B4, B5, B6) kann ein Bremsdruck verwendet werden. Es ist auch möglich, ein elektrisches Signal zu verwenden.

Zur Ermittlung der Drehzahlen der Räder (10, 20,30,40,50,60) ist jedem Rad ein Drehzahlfühler (11, 21,31,41,51,61) zugeordnet Der Drehzahlfühler kann z. B. als elektromagnetisch wirkender Impulsdrehzahlgeber ausgebildet sein, der mit einem am jeweiligen Rad drehfest angeordneten Zahnrad zur Erzeugung von Impulsen in Wirkverbindung steht. Die Drehzahlfühler geben Drehzahlsignale (D1, D2, D3, D4, D5, D6) an das Steuergerät (1) ab. Es wird im folgenden angenommen, daß die Drehzahlsignale (D1, D2, D3, D4, D5, D6) bereits von etwaigen Unterschieden in den Größen der Antriebsräder, z. B. aufgrund von Reifentoleranzen, bereinigt zur Verfügung stehen. Ein geeignetes Verfahren hierfür ist beispielsweise aus der DE 41 14 047 A1 bekannt.

Die Antriebskraft des Antriebsmotors (2) wird in Form einer Drehbewegung über die Achsen (6, 7, 8), das Verteilergetriebe (4) sowie die Ausgleichsgetriebe (3, 5) auf die Antriebsachsen (32, 42, 52, 62) übertragen. Die Getriebe (3, 4, 5) dienen zur Entkopplung der Drehbewegungen der Achsen (32, 42, 52, 62) bei einer Kurvenfahrt des Fahrzeuges zur Vermeidung von Ver spannungen und daraus eventuell resultierender Beschädigungen der Achsen. Die gleiche Wirkung die ser Getriebe tritt auch bei toleranzbedingten Unter. schieden bei den Größen der Antriebsräder ein.

Das Verteilergetriebe (4) und die Ausgleichs. getriebe (3, 5) sind jeweils als Differentialgetriebe aus. gebildet, die über jeweils eine Einrichtung zum Sperrer (3', 4', 5') ihrer jeweiligen Abtriebsachsen ausgestattet sind. Eine Einrichtung zum Sperren ist vorzugsweise als Klauenkupplung zum drehfesten Verbinden der Abtriebsachsen ausgebildet Die jeweilige Antriebsachse eines Differentialgetriebes wird von dieser Einrichtung nicht beeinflußt. Die Sperrung bzw. die Betätigung der Klauenkupplung wird von einem dem jeweiligen Differentialgetriebe zugeordneten Steuersignal (S3, S4, S5) von dem Steuergerät (1) ausgelöst. , nie Betätigungssignale zum Sperren (S3, S4, S5) können beispielsweise als ein Drucksignal oder ein elektrisches Signal ausgebildet sein.

Dem Verteilergetriebe (4) ist als Antriebswelle die Abtriebswelle (6) des Antriebsmotors (2) zugeordnet. Als Abtriebswellen, die infolge des Steuersignals (S4) durch Betätigung der Einrichtung zum Sperren (4') miteinander drehfest verbindbar sind, dienen die Achsen (7, 8).

Dem Ausgleichsgetriebe (3) ist als Antriebswelle die Abtriebswelle (7) des Verteilergetriebes (4) zugeordnet. Als Abtriebswellen, die infolge des Steuersignals (S3) durch Betätigung der Einrichtung zum Sperren (3') miteinander drehfest verbindbar sind, dienen die Achsen (32, 42).

Dem Ausgleichsgetriebe (5) ist als Antriebswelle die Abtriebswelle (8) des Verteilergetriebes (4) zugeordnet. Als Abtriebswellen, die infolge des Steuersignals (S5) durch Betätigung der Einrichtung zum Sperren (5') miteinander drehfest verbindbar sind, dienen die Achsen (52, 62).

Das Steuergerät (1) empfängt die Drehzahlsignale (D1, D2, D3, D4, D5, D6) und beobachtet diese in erfindungsgemäßer Weise. Infolge der Beobachtungen sendet das Steuergerät nach Bedarf die Betätigungssignale (B3, B4, B5, B6) an die als zweite Synchronisiermittel dienenden Bremseinrichtungen der Antriebsräder und Steuersignale (S3, S4, S5) an die als erste Synchronisiermittel dienenden Sperreinrichtungen (3', 4', 5') der Differentialgetriebe (3, 4, 5).

Die Erfindung kann in einer Vielzahl von Anwendungen eingesetzt werden. Hierbei werden - allgemein gesagt - die Drehzahlen zweier sich drehender Teile, denen ein erstes, gemeinsames Synchronisiermittel und zweite, den drehenden Teilen zugeordnete und jeweils einzeln betätigbare Synchronisiermittel zugeordnet sind, ermittelt und fortlaufend beobachtet. Bei Auftreten einer größeren Abweichung zwischen den Drehzahlen werden durch Betätigung wenigstens eines der zweiten Synchronisiermittel die Drehzahlen aneinander angenähert. Bei Erkennung einer vorbestimmten Annäherungstendenz werden durch Betätigung des ersten Synchronisiermittels die drehenden Teile dann synchronisiert.

In einer Anwendung des erfindungsgemäßen Verfahrens werden zunachs die Drehzahlsignale (D3, D4) betrachtet. Es wird zunächst angenommen, daß das Drehzahlsignal (D3) den größeren Wert aufweist. Aus diesen Signalen wird durch Subtraktion ein Differenzsignal (ΔD) berechnet:

$$\Delta D = D3 - D4 \qquad\qquad [1]$$

Das Differenzsignal (ΔD) wird beobachtet, bis es einen vorbestimmten Grenzwert (ΔDMAX) erreicht oder überschreitet.

Zur Vermeidung eines Fehlansprechens des Verfahrens beim Fahren enger Kurven kann zusätzlich noch eine Hilfsgröße unter Verwendung der Drehzahlsignale (D1, D2) bestimmt werden. Die Hilfsgröße wird dann auf Überschreitung eines ihr zugeordneten Hilfsgrenzwertes überprüft. Das Aussenden der Betätigungssignale (B3, B4) bzw. des Steuersignals (S3) wird in diesem Fall nur dann ausgelöst, wenn die zuvor genannte Überschreitung vorliegt.

Eine Möglichkeit zur Bestimmung des Hilfswertes besteht darin, die Differenz zwischen dem größeren der beiden Drehzahlsignale der angetriebenen Räder (hier D3) zu dem größeren der beiden Drehzahlsignale (D1, D2) der nicht angetriebenen Räder zu bestimmen.
Der Hilfswert stellt dann ein Schlupfsignal dar.

Nach Erreichen des Grenzwertes (ΔDMAX) und gegebenenfalls nach Überschreitung des Hilfsgrenzwertes sendet das Steuergerät (1) Betätigungssignale (B3, B4) an die betätigbaren Teile (34, 44) der Bremseinrichtungen. Hierdurch wird eine Annäherung der voneinander abweichenden Drehzahlen bewirkt. Vorzugsweise wird hierbei das die höhere Drehzahl (D3) aufweisende Rad (30) mittels des Betätigungssignals (B3) abgebremst.

Falls entgegen der bisherigen Annahme das Drehzahlsignal (D3) nicht den größeren Wert aufweisen sollte, würde die Subtraktion gemäß Formel [1] in umgekehrter Weise (ΔD = D4 - D3 ) durchgeführt werden, so daß das Differenzsignal (ΔD) wiederum ein positives Vorzeichen hätte. In diesem Fall würde vorzugsweise das Rad (40) mittels des Betätigungssignals (B4) abgebremst werden.

Die Betätigung der Bremseinrichtungen kann auch im Rahmen einer sogenannten Differentialbremsregelung, die Bestandteil eines Systems zur Antriebsschlupfregelung des Kraftfahrzeuges ist, vorgenommen werden. Hierbei ist es auch möglich, daß nicht nur das schneller drehende Rad abgebremst wird, sondern bei Erkennung eines beiderseitigen Antriebsschlupfes durch Vergleich mit den Drehzahlsignalen (11, 21) der nicht angetriebenen Räder (10, 20) können auch beide Antriebsräder (30, 40) mit Bremskraft beaufschlagt werden. Im Falle einer Differentialbremsregelung kann die Betätigung der Bremseinrichtungen auch schon vor Erkennung des Grenzwertes (ΔDMAX) begonnen werden, z. B. aufgrund einer großen Änderungsrate eines der Drehzahlsignale (D3, D4) oder der Drehzahidifferenz (ΔD).

Nach Erreichen des Grenzwertes (ΔDMAX) wird außerdem aus dem Differenzsignal (ΔD) fortlaufend ein Annäherungswert (A) bestimmt, der ein Maß für die Annäherungstendenz der Drehzahlsignale (D3, D4) darstellt. Der Annäherungswert (A) wird vorzugsweise nach der folgenden Formel bestimmt:

$$A = K1^*\Delta D + K2^*\frac{d}{dt}(\Delta D) \qquad\qquad [2]$$

Der Annäherungswert (A) wird fortlaufend auf Erreichen bzw. Unterschreitung eines hierfür festgelegten Grenzwertes (AMIN) überprüft. Bei Erreichen dieses Grenzwertes sendet das Steuergerät (1) ein entsprechendes Steuersignal (S3) zum Sperren des Ausgleichsgetriebes (3), so daß die Achsen (32, 42) und hiermit auch die Räder (30, 40) drehfest miteinander verbunden werden und somit gleiche Drehzahlsignale (D3, D4) aufweisen. Hiermit ist das Verfahren zur Synchronisation bezüglich der die Drehzahlsignale (D3, D4) aufweisenden Teile (30, 32, 33, 40, 42, 43) abgeschlossen.

In gleicher Weise wie bei den Rädern (30, 40) und den ihnen zugeordneten Teilen (31, 32, 33, 34, 41, 42, 43, 44) kann das Verfahren in einer zweiten Anwendung für die Räder (50, 60) und die damit verbundenen Teile (51, 52, 53, 54, 61, 62, 63, 64) eingesetzt werden. Als Drehzahlsignale werden dann die Signale (D5, D6) und als Steuersignal bzw. Betätigungssignale die Signale (S5, B5, B6) verwendet.

In einer dritten Anwendung des erfindungsgemäßen Verfahrens werden die Achsen (7, 8) als drehende Teile, die zu synchronisieren sind, betrachtet Die Synchronisation erfolgt dabei über die in dem Getriebe (4) angeordnete Sperre (4'), die mittels des Steuersignals (S4) von dem Steuergerät (1) betätigbar ist. Als zweite Synchronisiermittel werden wiederum die den einzelnen Rädern (30, 40, 50, 60) zugeordneten Bremseinrichtungen (33, 34, 43, 44, 53, 54, 63, 64) verwendet, die in dieser Anwendung paarweise bzw. achsweise betätigt werden. Hierbei werden zur Verringerung der Drehzahl der Achse (7) von dem Steuergerät (1) die Betätigungssignale (B3, B4) verwendet. Zur Verringerung der Drehzahl der Achse (8) werden in analoger Weise die Betätigungssignale (B5, B6) verwendet.

Die Drehzahlen der Achsen (7, 8) werden nicht direkt durch diesen Teilen zugeordnete Drehzahlfühler ermittelt. Statt dessen werden die Drehzahlen in dem Steuergerät aufgrund der Drehzahlsignale (D3, D4, D5, D6) berechnet. Die Drehzahl der Achse (7) ergibt sich dabei als arithmetischer Mittelwert aus den Drehzahlsignalen (D3, D4). Die Drehzahl der Achse (8) wird in analoger Weise als arithmetischer Mittelwert der Drehzahlsignale (D5, D6) berechnet.

Die Ausführung des erfindungsgemäßen Verfahrens in dieser dritten Anwendung erfolgt dann in der schon bei der ersten Anwendung beschriebenen Weise. In den verschiedenen Anwendungen können unterschiedliche Grenzwerte ($\Delta$DMAX, AMIN) und unterschiedliche Berechnungskonstanten (K1, K2) für die jeweiligen Annäherungswerte verwendet werden. Geeignete Werte hierfür sind:

| Getriebe (3): | $\Delta$DMAX = 1 m/s K1 = 5 | AMIN = 5 m/s K2 = 0,2s |
|---|---|---|
| Getriebe (4): | $\Delta$DMAX = 1 m/s K1 = 5 | AMIN = 10 m/s K2 = 0,2 s |
| Getriebe (5): | $\Delta$DMAX = 1 m/s K1 = 5 | AMIN = 5 m/s K2 = 0,2 s |

**Patentansprüche**

1. Verfahren zur Synchronisation zweier sich drehender Teile (7, 8, 32, 42, 52, 62), insbesondere in einem Fahrzeug, wobei wenigstens ein erstes, den beiden drehenden Teilen (7, 8, 32, 42, 52, 62) zugeordnetes Synchronisiermittel (3', 4', 5') vorhanden ist, mit folgenden Merkmalen:

    a) es werden die Drehzahlen (D3, D4, D5, D6) der drehenden Teile (7, 8, 32, 42, 52, 62) ermittelt,

    b) die Drehzahlen (D3, D4, D5, D6) werden beobachtet, bis eine vorbestimmte Abweichung ($\Delta$DMAX) zwischen den Drehzahlen auftritt,

    c) nach Erkennung der vorbestimmten Abweichung ($\Delta$DMAX) werden die Drehzahlen (D3, D4, D5, D6) beobachtet, bis eine vorbestimmte Annäherungstendenz (AMIN) der Drehzahlen aneinander vorliegt,

    d) bei Erkennung der vorbestimmten Annäherungstendenz (AMIN) werden durch Betätigung des ersten Synchronisiermittels (3', 4', 5') die drehenden Teile (7, 8, 32, 42, 52, 62) synchronisiert,

    e) es sind zweite, den drehenden Teilen (7, 8, 32, 42, 52, 62) mittelbar oder unmittelbar zugeordnete und jeweils einzeln betätigbare Synchronisiermittel (33, 34, 43, 44, 53, 54, 63, 64) vorhanden,

    f) die Annäherung der Drehzahlen (D3, D4, D5, D6) aneinander zwecks Erzielung der vorbestimmten Annäherungstendenz (AMIN) wird durch Betätigung wenigstens eines der zweiten Synchronisiermittel (33, 34, 43, 44, 53, 54, 63, 64) bewirkt,

    g) aus den Drehzahlen (D3, D4, D5, D6) wird ein Annäherungswert (A) bestimmt, der ein Maß für die Annäherungstendenz der Drehzahlen aneinander darstellt,

h) wenn der Annäherungswert (A) einen vorbestimmten Grenzwert (AMIN) erreicht, werden durch Betätigung des ersten Synchronisiermittels (3', 4', 5') die drehenden Teile (7, 8, 32, 42, 52, 62) synchronisiert,

i) der Annäherungswert (A) weist wenigstens einen Anteil auf, der von der Differenz (ΔD) der Drehzahlen (D3, D4, D5, D6) abhängt,

**dadurch gekennzeichnet, daß**
der Annäherungswert (A) wenigstens einen Anteil aufweist, der von der Ableitung der Differenz (ΔD) der Drehzahlen (D3, D4, D5, D6) nach der Zeit abhängt, und daß der Annäherungswert (A) berechnet wird nach der Formel

$$A = K1 \cdot \Delta D + K2 \cdot \frac{d}{dt}(\Delta D)$$

mit K1 = erste Konstante und K2 = zweite Konstante.

2. Verfahren nach wenigstens einem der vorhergehenden Patentansprüche, **dadurch gekennzeichnet, daß** als erstes Synchronisiermittel (3', 4', 5') eine Sperre für ein Ausgleichsgetriebe und/oder Verteilergetriebe verwendet wird (Differentialsperre).

3. Verfahren nach wenigstens einem der vorhergehenden Patentansprüche, **dadurch gekennzeichnet, daß** die zweiten Synchronisiermittel (33, 34, 43, 44, 53, 54, 63, 64) eine Abbremsung des bzw. der mit ihnen in Wirkverbindung stehenden, drehenden Teils bzw. Teile (7, 8, 32, 42, 52, 62) mit einstellbarer Bremskraft bewirken.

4. Verfahren nach wenigstens einem der vorhergehenden Patentansprüche, **dadurch gekennzeichnet, daß** das erste Synchronisiermittel (3', 5') und/oder die zweiten Synchronisiermittel (33, 34, 43, 44, 53, 54, 63, 64) zur Synchronisation der Räder (30, 40, 50, 60) einer Fahrzeugachse dienen (Quersperre).

5. Verfahren nach wenigstens einem der vorhergehenden Patentansprüche, **dadurch gekennzeichnet, daß** das erste Synchronisiermittel (4') und/oder die zweiten Synchronisiermittel (33, 34, 43, 44, 53, 54, 63, 64) zur Synchronisation zweier Achsen eines Fahrzeuges dienen (Längssperre).

6. Verfahren nach wenigstens einem der vorhergehenden Patentansprüche, **gekennzeichnet durch** folgende Merkmale:

   a) die Betätigung des ersten Synchronisiermittels (3', 4', 5') und/oder der zweiten Synchronisiermittel (33, 34, 43, 44, 53, 54, 63, 64) erfolgt erst, wenn eine Hilfsgröße einen ihr zugeordneten Hilfsgrenzwert überschreitet,

   b) die Hilfsgröße stellt in einem Fahrzeug ein Maß für den Antriebsschlupf eines Rades (30, 40, 50, 60) dar.

**Claims**

1. Method for synchronising two rotating components (7, 8, 32, 42, 52, 62), especially in a vehicle, there being present at least one first synchronising means (3', 4', 5') associated with both rotating components (7, 8, 32, 42, 52, 62), the method comprising the following features:

   a) the rotational speeds (D3, D4, D5, D6) of the rotating components (7, 8, 32, 42, 52, 62) are determined,

   b) the rotational speeds (D3, D4, D5, D6) are monitored until a prespecified disparity (ΔDMAX) between the rotational speeds occurs,

   c) after detection of the prespecified disparity (ΔDMAX), the rotational speeds (D3, D4, D5, D6) are monitored until there is a prespecified convergence tendency (AMIN) of the rotational speeds towards one another,

   d) on detection of the prespecified convergence tendency (AMIN), the rotating components (7, 8, 32, 42, 52, 62) are synchronised by actuation of the first synchronising means (3', 4', 5'),

   e) there are present second synchronising means (33, 34, 43, 44, 53, 54, 63, 64), which are associated directly or indirectly with the rotating components (7, 8, 32, 42, 52, 62) and each of which is arranged to be actuated singly,

f) the convergence of the rotational speeds (D3, D4, D5, D6) towards one another for the purpose of obtaining the prespecified convergence tendency (AMIN) is brought about by actuation of at least one of the second synchronising means (33,34,43,44,53,54,63,64),

g) from the rotational speeds (D3, D4, D5, D6) there is determined a convergence value (A), which constitutes a measure of the convergence tendency of the rotational speeds towards one another,

h) when the convergence value (A) reaches a prespecified limit value (AMIN), the rotating components (7, 8, 32, 42, 52, 62) are synchronised by actuation of the first synchronising means (3', 4', 5'),

i) the convergence value (A) has at least one component that is dependent upon the difference ($\Delta$D) in the rotational speeds (D3, D4, D5, D6),

**characterised in that** the convergence value (A) has at least one component that is dependent upon the derivative of the difference ($\Delta$D) in the rotational speeds (D3, D4, D5, D6) with respect to time; and the convergence value (A) is calculated according to the formula

$$A = K1 \cdot \Delta D + K2 \cdot \frac{d}{dt}(\Delta D)$$

wherein K1 = first constant and K2 = second constant.

2. Method according to at least one of the preceding patent claims, **characterised in that** a lock for an equalising gear and/or distributor gear (differential lock) is used as the first synchronising means (3', 4', 5').

3. Method according to at least one of the preceding patent claims, **characterised in that** the second synchronising means (33, 34, 43, 44, 53, 54, 63, 64) cause braking, by means of an adjustable braking force, of the component (s) (7, 8, 32, 42, 52, 62) in operative connection with them.

4. Method according to at least one of the preceding patent claims, **characterised in that** the first synchronising means (3', 5') and/or the second synchronising means (33, 34, 43, 44, 53, 54, 63, 64) serve for synchronising the wheels (30, 40, 50, 60) on one vehicle axle (transverse lock).

5. Method according to at least one of the preceding patent claims, **characterised in that** the first synchronising means (4') and/or the second synchronising means (33, 34, 43, 44, 53, 54, 63, 64) serve for synchronising two shafts of a vehicle (longitudinal lock).

6. Method according to at least one of the preceding patent claims, **characterised by** the following features:

a) the first synchronising means (3', 4', 5') and/or the second synchronising means (33, 34, 43, 44, 53, 54, 63, 64) is/are actuated only when an auxiliary parameter exceeds an auxiliary limit value assigned to it,

b) in a vehicle, the auxiliary parameter constitutes a measure of the drive slip of a wheel (30, 40, 50, 60).

**Revendications**

1. Procédé pour la synchronisation de deux pièces en rotation (7, 8, 32, 42, 52, 62), en particulier dans un véhicule automobile, au moins un premier moyen de synchronisation (3', 4', 5') associé aux deux pièces en rotation (7, 8, 32, 42, 52, 62) étant prévu, avec les éléments suivants :

a) on détermine les vitesses de rotation (D3, D4, D5, D6) des pièces en rotation (7, 8, 32, 42, 52, 62),
b) on observe les vitesses de rotation (D3, D4, D5, D6), jusqu'à ce qu'un écart prédéterminé ($\Delta$DMAX) apparaisse entre les vitesses de rotation,
c) après constatation de l'écart prédéterminé ($\Delta$DMAX), on observe les vitesses de rotation (D3, D4, D5, D6), jusqu'à ce qu'une tendance d'approche prédéterminée (AMIN) des vitesses de rotation se présente,

d) lorsqu'on constate la tendance d'approche prédéterminée (AMIN), les pièces en rotation (7, 8, 32, 42, 52, 62) sont synchronisées par actionnement du premier moyen de synchronisation (3', 4', 5'),

**caractérisé en ce que** :

e) il est prévu des seconds moyens de synchronisation (33, 34, 43, 44, 53, 54, 63, 64) associés chacun indirectement ou directement aux pièces en rotation (7, 8, 32, 42, 52, 62) et susceptibles d'être actionnés chacun individuellement,

f) l'approche des vitesses de rotation (D3, D4, D5, D6) les unes des autres pour obtenir une tendance d'approche prédéterminée (AMIN) est provoquée par actionnement de l'un au moins des seconds moyens de synchronisation (33, 34, 43, 44, 53, 54, 63, 64),

g) on détermine à partir des vitesses de rotation (D3, D4, D5, D6) une valeur d'approche (A) qui représente une valeur pour la tendance d'approche des vitesses de rotation,

h) lorsque la valeur d'approche (A) atteint une valeur limite prédéterminée (AMIN), les pièces en rotation (7, 8, 32, 42, 52, 62) sont synchronisées par actionnement du premier moyen de synchronisation (3', 4', 5'),

i) la valeur d'approche (A) présente au moins une part qui dépend de la différence (ΔD) entre les vitesses de rotation (D3, D4, D5, D6),

**caractérisé en ce que** la valeur d'approche (A) présente au moins une part qui dépend de la dérivée de la différence (ΔD) entre les vitesses de rotation (D3, D4, D5, D6) en fonction du temps, et **en ce que** la valeur d'approche est calculée d'après la formule

$$A = K1 * \Delta D + K2 * \frac{d}{dt}(\Delta D) \qquad (2)$$

dans laquelle K1 est une première constante et K2 est une seconde constante.

2. Procédé selon l'une au moins des revendications précédentes, **caractérisé en ce que** l'on utilise en tant que premier moyen de synchronisation (3', 4', 5') un blocage pour un engrenage compensateur et/ou un engrenage distributeur (blocage différentiel).

3. Procédé selon l'une au moins des revendications précédentes, **caractérisé en ce que** les seconds moyens de synchronisation (33, 34, 43, 44, 53, 54, 63, 64) provoquent un freinage avec force de freinage réglable de la pièce ou des pièces en rotation (7, 8, 32, 42, 52, 62) en liaison d'action avec ceux-ci.

4. Procédé selon l'une au moins des revendications précédentes, **caractérisé en ce que** le premier moyen de synchronisation (3', 5') et/ou les seconds moyens de synchronisation (33, 34, 43, 44, 53, 54, 63, 64) servent à la synchronisation des roues (30, 40, 50, 60) d'un essieu de véhicule (blocage transversal).

5. Procédé selon l'une au moins des revendications précédentes, **caractérisé en ce que** le premier moyen de synchronisation (4') et/ou les seconds moyens de synchronisation (33, 34, 43, 44, 53, 54, 63, 64) servent à la synchronisation de deux essieux d'un véhicule (blocage longitudinal).

6. Procédé selon l'une au moins des revendications précédentes, **caractérisé en ce que** :

a) l'actionnement du premier moyen de synchronisation (3', 4', 5') et/ou des seconds moyens de synchronisation (33, 34, 43, 44, 53, 54, 63, 64) s'effectue uniquement lorsqu'une grandeur auxiliaire dépasse une valeur limite auxiliaire qui lui est associée,

b) la grandeur auxiliaire représente dans un véhicule une valeur pour le patinage d'une roue (30, 40, 50, 60).

Fig. 1

EP 0 885 766 B2